Europäisches Patentamt

European Patent Office

Office européen des brevets

(19)

(11) Publication number: **0 147 008**
**A2**

(12) **EUROPEAN PATENT APPLICATION**

(21) Application number: **84305947.8**

(22) Date of filing: **30.08.84**

(51) Int. Cl.⁴: **H 04 L 27/10**

(30) Priority: **30.09.83 US 537888**

(43) Date of publication of application:
**03.07.85 Bulletin 85/27**

(84) Designated Contracting States:
**DE FR GB NL**

(71) Applicant: **TEXAS INSTRUMENTS INCORPORATED**
**13500 North Central Expressway**
**Dallas Texas 75265(US)**

(72) Inventor: **Smith, David A.**
**Route 1, Box 206B**
**Coupland, TX 78615(US)**

(72) Inventor: **Eckelkamp, B. Jesse**
**7509 Barcelona Drive**
**Austin, TX 78751(US)**

(74) Representative: **Abbott, David John et al,**
**Abel & Imray Northumberland House 303-306 High**
**Holborn**
**London, WC1V 7LH(GB)**

(54) **Bilateral digital FSK communication system interface using digital technique.**

(57) A bilateral digital FSK communication system communicates with a desired module. Connected to a terminal is a digital FSK modem having a clock that provides a pair of signal frequencies, the lower frequency representing a mark and the higher frequency representing a space. An FSK modulator receives a data signal from the terminal and the mark and space frequency from the clock and selects either a mark or space frequency depending upon the corresponding data signal. The output from the modulator is then applied to a light emitting diode which transmits a mark or space signal frequency down a fiber optic line. A mark or a space signal frequency is received on a fiber optic line from the desired module by the modem. A demodulator receives and identifies the mark or the space frequency signal and provides a corresponding data signal to the terminal.

EP 0 147 008 A2

./...

Fig. I

BILATERAL DIGITAL FSK COMMUNICATION SYSTEM
INTERFACE USING DIGITAL TECHNIQUE

BACKGROUND OF THE INVENTION
Field of the Invention

This invention relates in general to bilateral digital FSK communication and in particular to the transmission and reception of FSK signals utilizing a digital FSK modem for communication with digital data handling apparatus.

Description of the Prior Art

Discrete component type analog FSK communication systems are well known in the prior art. These systems include FSK modem components.

FSK modulation has been used for many years in telephone line modems. They commonly employ a voltage controlled oscillator for the modulator and a phase locked loop or dual filters and a comparator for the demodulator. All of these prior art circuits require adjustments during tests to set the frequencies of the modulator and the midpoint of the demodulator.

BRIEF SUMMARY OF THE INVENTION

An integrated circuit gate array forms the FSK modem for use in this preferred embodiment to receive data from and supply data to a terminal.

A crystal oscillator provides an input to a divider circuit which divides down the crystal frequency to desired frequencies, a pair of which is employed as carrier frequencies. The higher frequency (1.2288 MHZ) represents the space signal and the lower frequency (614.4 KHZ) represents the mark signal. These particular clock rates are selected to be an even multiple of commonly used asynchronous data rates and therefore no additional clock source is required when this circuit is included in the terminal or computer.

The data from the terminal is applied to a selector circuit which also has the above mentioned carrier frequencies applied. If the data from the terminal is a logic "1", then

-2-

the selection circuit permits the lower frequency carrier to be output. If the data is a "0" then the higher frequency is output.

The output signal is applied to an LED, in the preferred embodiment, which is connected to transmit a light signal down a fiber optic conductor. A receiver on the other end associated with a desired module then receives the modulated light signal.

A light signal from a desired module is received on a second fiber optic conductor and transmitted to a light detecting transistor in this preferred embodiment. The electrical FSK signal from the light detecting transistor is then applied to a demodulating circuit. In this preferred embodiment, the demodulator is effectively a counter which counts a crystal derived clock signal for the total time between transitions of the received FSK signal and is reset to zero following each transition of the received FSK signal. If the count is more than a predetermined value when the received FSK signal transition is detected, then a mark was received. If the count is less than the predetermined value, then a space was received. The logic "1" or "0" representing a mark or space, respectively, is then transmitted to the terminal.

The receiver portion of the modem is also provided with a carrier detect circuit. This circuit receives the incoming FSK signal and ascertains whether either carrier is present by detecting the occurrence of a transition on the received FSK signal within a time period equal to two of the low frequency cycles. If no carrier is present, an indicia signal sets the demodulator to provide a known output (mark state).

The principal object of this invention is to provide a bilateral digital FSK communication link between a host computer system and its remote terminal.

A further object of this invention is to provide a bilateral communication system that is immune to electrostatic interference problems.

-3-

Still another object of this invention is to provide a communication system that meets VDE and FCC radiation emission standards.

A further object of this invention is to provide a bilateral digital FSK communication system that employs light transmission through fiber optics between a host computer system and its remote terminal.

These and other objects will be made evident in the detailed description that follows.

BRIEF DESCRIPTION OF THE DRAWINGS

Figure 1 is a block diagram of the bilateral commnication system.

Figure 2 is a schematic diagram of the clock generation.

Figure 3 is a schematic diagram of the transmitter portion of the modem of this invention.

Figure 4 is a schematic diagram of the receiver portion of the modem.

Figure 5 illustrates wave shapes involved in the transmitter portion of the modem.

Figure 6a illustrates wave shapes involved in the receiver portion of the modem.

Figures 6b and 6c illustrate the effect of a mark (1) and a space (0) in the waveforms involved in the receiver.

DETAILED DESCRIPTION OF THE INVENTION

This bilateral communication system provides an all digital modem link between electronic devices. Reliability is increased and noise immunity is optimized. In this preferred embodiment, the use of an optical emitter and an optical receiver coupled to fiber optic conductors for transmission and receipt of FSK data provides for very low noise.

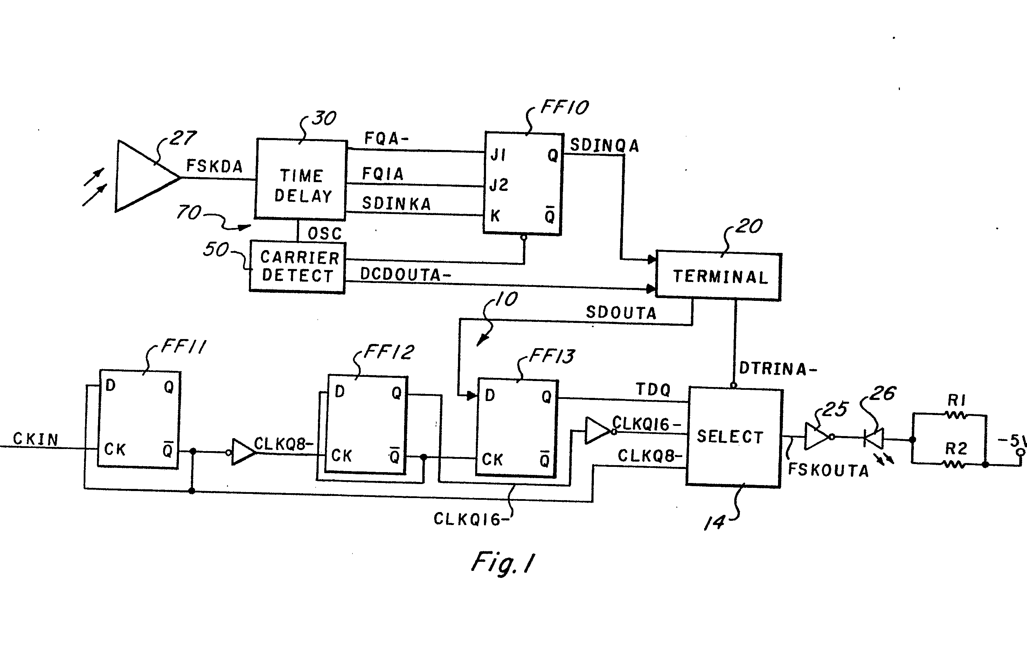

Referring first to Figure 1, receiver 70 and transmitter 10 are shown in block form, together with terminal 20.

In transmitter 10, clock signal CKIN is shown clocking flip flop FF11 whose /Q output provides clock signal /CLQ8 which provides an input to select circuit 14 and also, inverted, provides the clock input to flip flop FF12. The Q output of flip flop FF12 is inverted and applied as signal /CLK16 to select circuit 14. The /Q output of flip flop FF12 is applied as the clock input to flip flop FF13 whose D input is provided by signal SDOUTA, the data signal from terminal 20, which is then output as signal TDQ and applied to the select circuit 14. Signal /DTRINA is a terminal ready signal which permits the select circuit 14 to operate providing signal FSKOUTA the signal to driver 25 which in turn drives light emitting diode 26. In this preferred embodiment, driver 25 is a Texas Instruments Type 75452 and LED 26 is a Honeywell Type SE3362-3. When LED 26 is turned on, light is impressed on a fiber optic conductor (not shown) which is connected to a desired module. Its transmission is, of course, not limited to fiber optic techniques and may be transformer coupled, optically coupled without fiber optics, etc.

The terminal 20 that is employed in this preferred embodiment is a Texas Instruments Type 931. Of course, any terminal or other digital handling apparatus such as a digital computer is contemplated as well.

With reference to receiver 70, light detector 27 receives an input, in this preferred embodiment, from a fiber optic conductor (not shown) providing signal FSKDA which is input to time delay circuit 30. In this preferred embodiment, a series of flip flops is employed for the time delay. Also, carrier detect 50 provides delay through the use of flip flops. In a second embodiment, time delay 30 and carrier detect 50 both comprise Texas Instruments Type 54LS123 one shot multivibrators.

Signal OSA from time delay circuit 30 provides an input to carrier detect circuit 50. Time delay circuit 30 also provides signals /FQA and FQ1A as the J1 and J2 ANDED inputs to flip flop FF10. Another output of time delay circuit 30 is signal /SDINKA which is applied to the /K input of flip flop FF10. The output of carrier detect 50, if no carrier is detected in a predetermined time (in the order of three microseconds in this preferred embodiment) resets flip flop FF10. It also provides signal /DCDOUTA to terminal 20. The DATA OUT signal (mark or space) is signal SDINQA from the Q output of flip flop FF10 to terminal 20.

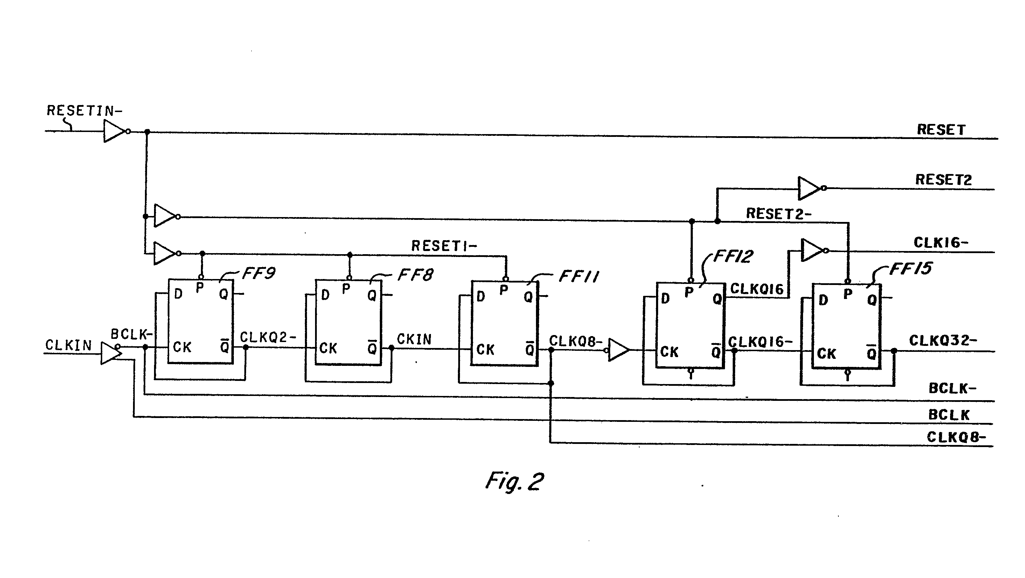

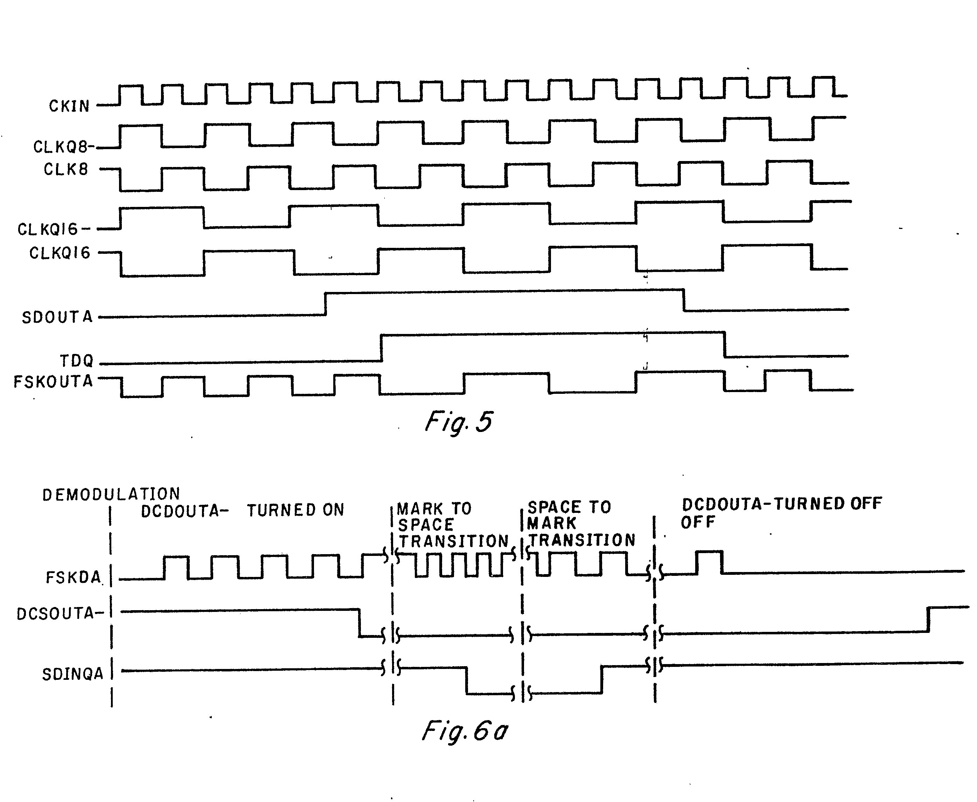

Figure 2 illustrates the clock circuit used in this communication system. Signal CLKIN is shown as the input clock from a crystal oscillator (not shown) at a frequency of 9.8304 MHZ. This signal is buffered and inverted to provide clock signals BCLK and /BCLK. Signal /BCLK provides the clock input to flip flop FF9 whose /Q output provides the clock input to flip flop FF8. The /Q output of flip flop FF8 is signal CKIN which is shown as the comparative clock signal in Fig. 5. Signal CKIN provides the clock input to flip flop FF11 whose /Q output signal /CLKQ8 is the high speed carrier frequency. Inverted, that signal is applied as the clock input signal for flip flop FF12 whose Q output is signal CLKQ16 which is inverted as signal /CLK16, the high speed carrier frequency. As indicated earlier, the spacefrequency is provided by signal /CLKQ8 and the markfrequency is provided by signal /CLK16. The /Q output of flip flop FF12 provides the clock input to flip flop FF15 whose /Q output provides signal /CLKQ32.

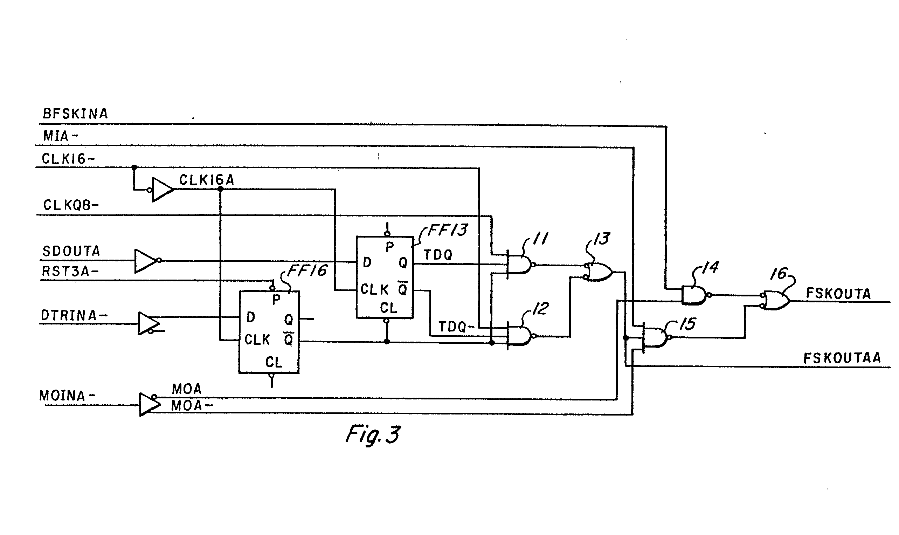

Figure 3 illustrates flip flops FF16 and FF13. Flip flop FF16 receives buffered data terminal ready signal /TDRINA on its D input. It is clocked by the inversion of signal /CLK16, for synchronizing the data with the lower transmission frequency. The /Q output of flip flop FF16 provides the clear input to flip flop FF13 (shown in Fig. 1). Signals TDQ and /TDQ from the Q and /Q outputs of flip flop FF13, respectively, provide inputs to NAND gates 11 and 12 respectively. Synchronizing flip flop FF16 provides its /Q output as an input to each of NAND gates 11 and 12. High speed carrier signal /CLKQ8 provides the final input to NAND gate 11 and low speed carrier signal /CLK16 provides the final input to NAND gate 12. These two NAND gates provide the inputs to NAND gate 13. If the data signal SDOUTA, which is inverted and applied to the D input of flip flop FF13, is a "0", then gate 11 is active. If not, then gate 12 is active. Therefore, gate 13 provides either a mark or a space signal frequency, depending upon the presence or absence of a signal as established in flip flop FF13. Signal FSKOUTAA is provided as an output from NAND gate 13. NAND gates 14, 15 and 16 provide a diagnostic loop back control circuit for either supplying the output of the modular circuit (signal FSKOUTAA) for transmission or retransmitting the received FSK signal BFSKINA. Signals /M1A and /MOINA are involved in the loop back control.

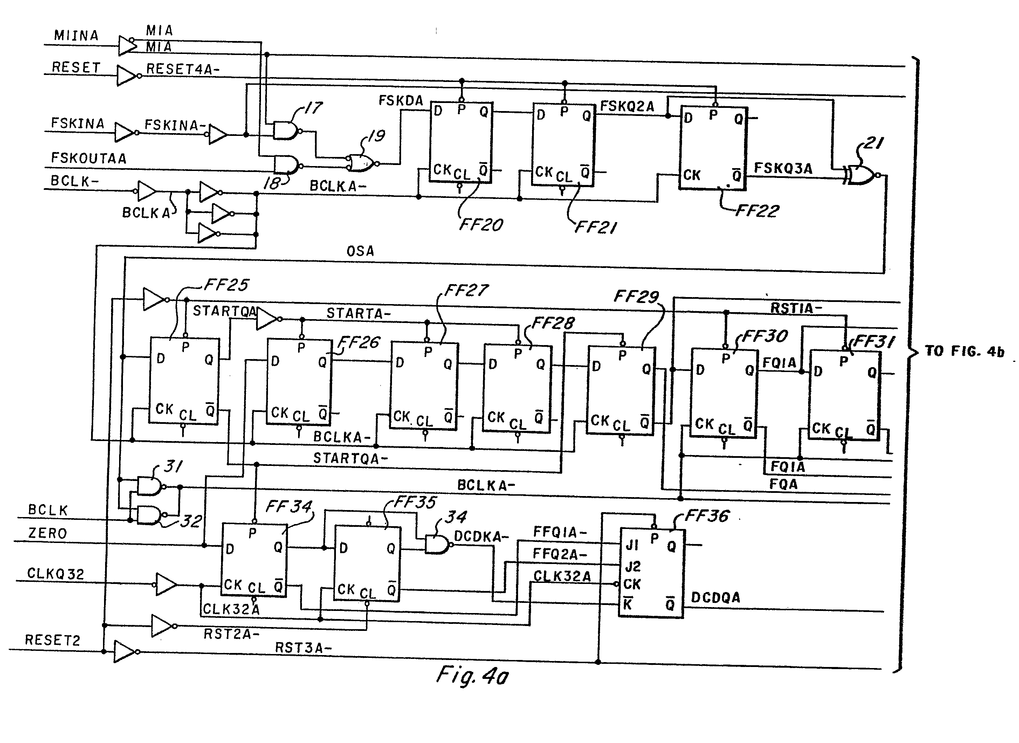

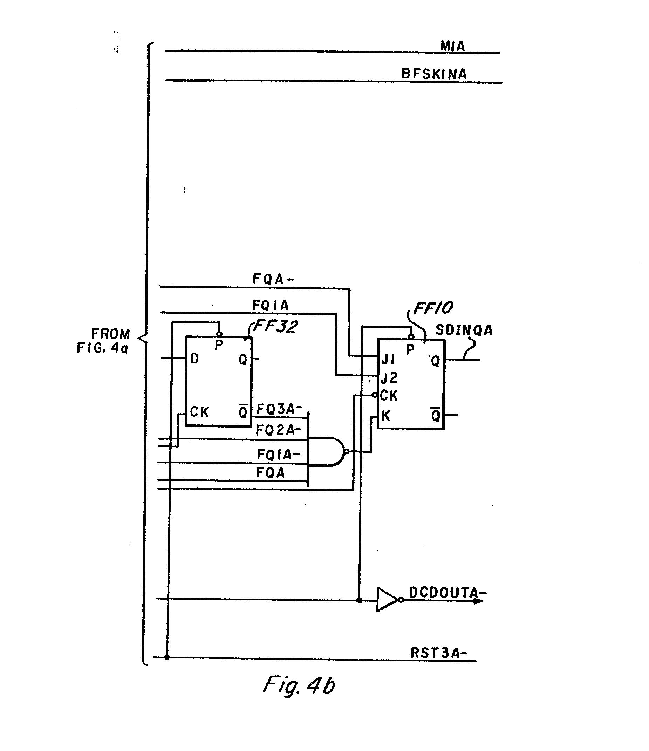

Figure 4 can now be referred to for an understanding of the receiver portion of the modem. Signal FSKINA represents the signal received by the detector 27 of Fig. 1. After buffering and passing through the three NAND gate stages shown, (17, 18, 19) signal FSKDA results. The three mentioned NAND gates are simply involved in loop back diagnosis, controlled by signals /M1INA, buffered and inverted, and FSKOUTAA.

Signal FSKDA is applied to the D input of flip flop FF20 whose Q output is connected to the D input of flip flop FF21, whose Q output is connected to the D input of flip flop FF22. The clock input for these three flip flops is provided by clock signal /BCLK, inverted twice and represented as signal /BCKLA. Flip flops FF20-FF22 simply provide synchronization of the received data, FSKINA with the internal clock.

Exclusive NOR gate 21 receives as inputs the /Q output fom flip flop FF22 and the Q output from flip flop FF21. The output from NOR gate 21 is signal OSA which is a single clock time pulse occurring after each transition of the input signal FSKINA. This signal provides an input to flip flop FF25 which provides a single clock period delay. Signal STARTQA is provided on its Q output and signal /STARTQA on its /Q output. Flip flops FF26, FF27, FF28 and FF29 form a shift register,

-7-

each clocked by signal /BCLKA, which is the buffered version of clock signal /BCLK. Signal STARTQA is inverted and provides the preset input to flip flops FF26-FF28. Flip flop FF29 is preset by signal /STARTQA, mentioned above. The Q output of flip flop FF29 provides signal FQA and the /Q output provides signal /FQA.

NAND gates 31 and 32 each receive signal OSA as an input and clock signal BCLK to provide output signal /DCLKA which provides the clock input to flip flops FF30, FF31 and FF32. It also provides the inverted clock input to flip flop FF10. Signal FQA could be used as the output data signal. However, for purposes of reliability, this circuit employs a noise rejection section which is formed by flip flops FF30, FF31 and FF32, connected as a shift register as shown. The /Q output from flip flop FF29 is shifted into flip flop FF30. When the next transition time occurs (as indicated by signal /DCLKA), the contents of flip flop FF30 are shifted into flip flop FF31. Upon the next transition, the contents of flip flop FF31 are shifted into flip flop FF32, the contents of flip flop FF30 are shifted into flip flop FF31 and the contents of flip flop FF29 are shifted into flip flop FF30. Signal FQA and the /Q outputs of flip flops FF30-FF32, namely /FQ1A, /FQ2A and /FQ3A provide inputs to NAND gate 33.

If all flip flops have been filled with zeroes, then a high speed signal (space) is indicated and the output from NAND gate 33, signal /SDINKA is provided to the /K input of flip flop FF10 driving the Q output signal, SDINQA low (space). On the other hand, if signal /FQA, applied to the J1 input of flip flop FF10 and signal FQ1A, the Q output of flip flop FF30 applied to J2 are both present, then the low frequency carrier is indicated and signal SDINQA is driven high (mark).

-8-

To detect that a carrier is indeed present, flip flops FF34 and FF35, together with NAND gate 34 and JK flip flop FF36, form carrier detect circuit 50. The D input of flip flop FF34 is held low while the preset input is activated by signal /STARTQA. The clock input to flip flop FF34 is provided by the inversion of clock signal /CLKQ32. Each time flip flop FF34 is clocked, its Q output is set to zero. If the preset signal /STARTQA occurs, then the Q output at FF34 is set to a logical one. Flip flop FF34 Q output provides the D input to flip flop FF35. If the /STARTQA signal occurs between two clocking edges of CLK32A, then a "1" will be clocked into FF35. If not, then a "0" will be clocked into FF35. Signal /FFQ1A, the /Q output of FF34 is connected to the J1 input of the flip flop FF36. Its Q output also provides one input to NAND gate 34 whose other input is provided by the Q output of the flip flop FF35. The output of NAND gate 34 is signal /DCDKA which is connected to the /K input of flip flop FF36. The /Q output of flip flop FF35 is signal /FFQ2A which is connected to the J2 input of flip flop FF36. If both flip flops FF34 and FF35 had been set, then signal CDCQA is clocked to a "1", which is inverted and sent out as signal /DCDOUTA, as shown in Fig. 1. If both flip flops FF34 and FF35 are not set, then signal DCDQA will be clocked to a "0" and flip flop FF10 will be preset so that signal SDINQA will go high.

-9-

## MODE OF OPERATION

Referring again to the figures, and especially to Figures 5, 6a and 6b, the operation of the circuit will be described. Terminal 20 provides a data terminal ready signal, /DTRINA, and flip flop FF8 provides clock signal CKIN. Data signal SDOUTA from terminal 20 is also provided. Referring to Fig. 5, clock signal CKIN is shown with high speed carrier /CLKQ8 and its inversion, CLK8, shown at 1/2 the frequency of clock signal CKIN. Low speed carrier signal CLK16 and its inversion CLKQ16, are shown at 1/4 the frequency of signal CKIN. Signal CKIN, as indicated above, is at a frequency of 2.4576 MHZ, in this preferred embodiment. When the serial data, SDOUTA, is a "mark", signal /CLK16 is transmitted through driver 25 to LED 26. The selection of signal /CLK16 is made through select circuitry 14 described earlier. That is, if signal TDQ is also high, then the low frequency carrier, /CLK16 is transmitted to LED 26 which in turn sends a light pulse down a fiber optic conductor. In Figure 5, please note that when signal PDQ is low, signal FSKOUTA is at the high frequency. When signal TDQ goes high, signal FSKOUTA is at the /CLK16 frequency. It should also be noted that the incoming data, TDQ, is synchronized with the falling edge of clock /CLK16. This results in a phase coherent output signal FSKOUTA driving the LED 26.

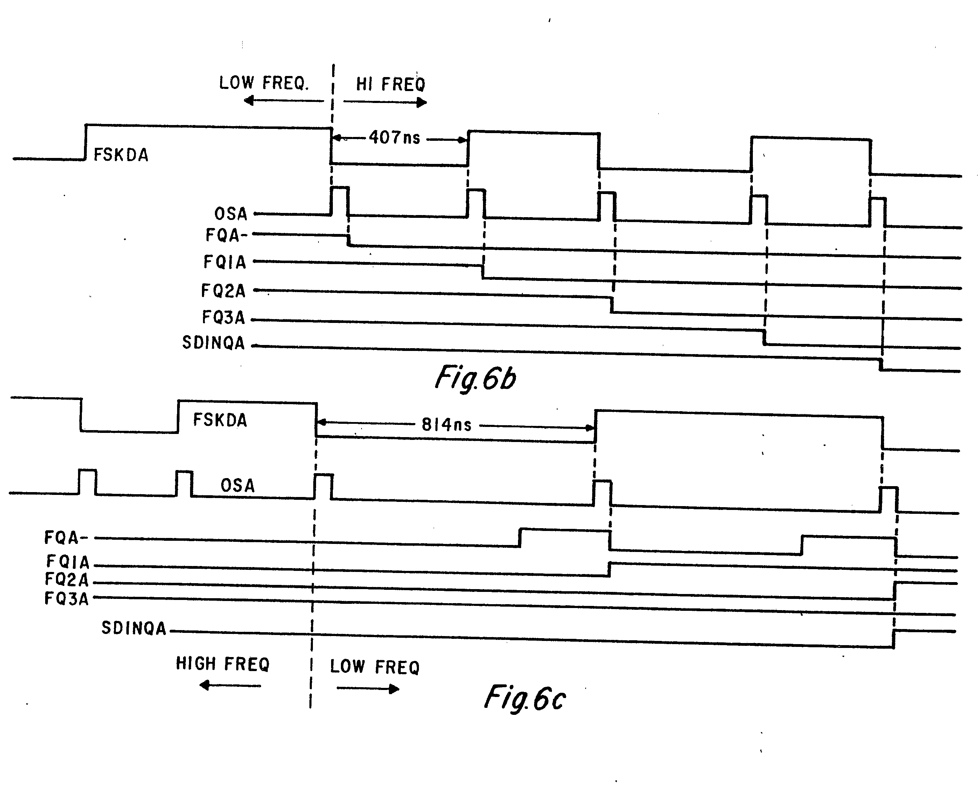

Signal FSKDA, shown in Fig. 6a, is the result of an input signal from detector 27, as mentioned earlier. Signal FSKDA is shown in Fig. 6a as first being a low frequency (mark) and then as a high frequency (space). Signal FSKDA is synchronized through flip flops FF20-FF22, providing signal OSA, a single clock time gating pulse. Clock signal BCLK is gated by signal OSA and provides signal DCLKA, the indicator of an input transition. As explained above, if the input signal is at the low carrier frequency then flip flop FF10 will be set to drive signal SDINQA to the high state. If the carrier frequency is high, then signal /SDINKA will be present, causing the output signal SDINQA to go low.  In this preferred embodiment, the half cycle time for the high carrier frequency is 407 nanoseconds and for the low frequency carrier is 814 nanoseconds, as shown in Figures 6b and 6c.  A determination of whether the input data has had  a 407 nanosecond period or a 814 nanosecond period is determined as described above.  The signal FQA occurs 610 nanoseconds after each edge of input signal FSKDA, if the mark frequency is received.

Signal FQ1A is not used as the output signal but instead flip flops FF30-FF32 provide input noise rejection to determine whether it is truly a mark or a space, as described above.

Also, it is determined whether or not there is  a carrier present by the carrier detect circuit 50.  This carrier detect provides a delay in the  order of  three  microseconds to determine that indeed a carrier is present as indicated by a loading of flip flops FF34 and FF35, as described above.  If both of those flip flops are set, then a carrier is present and normal operation occurs.  If that is not the case, then flip flop FF10 is preset to the "1" state and normal operation is haulted.

It is contemplated that those skilled in the art may change the logic structure and the component types shown in this preferred embodiment without departing from the scope of this invention which is described by the appended claims.

CLAIMS:

1.   A bilateral digital FSK communication system for communicating with a desired module comprising:

(a)   digital data originating and receiving means;

(b)   clock means for providing at least one pair of electrical signals at different frequencies, the lower frequency signal representing a mark and the higher frequency representing a space;

(c)   FSK modulating means, operatively connected to the digital data originating and receiving means, for receiving a data signal therefrom, and for receiving the mark and space signals, and for selecting either the mark or space signal depending upon the corresponding data signal;

(d)   first transmission means   for receiving the selected mark or space signal and for transmitting the selected signal to the desired module;

(e)   second transmission means for receiving a mark or space signal from the desired module; and

(f)   demodulating means connected to receive and to identify the mark or space signal from the desired module and to provide a data signal representative of a mark or a space signal to the digital data originating and receiving means.

2.   The system of claim 1 further comprising carrier detect means connected to receive the mark or space signal from the desired module and to provide an indicia signal indicative of the presence of either the mark or space signal.

3.   The system of claim 2 wherein the indicia signal is input to the demodulating means to set the output thereof to a known state.

4. The system of claim 2 wherein the digital data originating and receiving means comprises terminal means.

5. The system of Claim 4 wherein the FSK modulating means comprises selector means.

6. The system of Claim 4 wherein the first transmission means comprises light emitting means.

7. The system of Claim 6 wherein the second transmission means comprises light detecting means.

8. The system of Claim 6 wherein the first transmission means further comprises fiber optic means.

9. The system of Claim 7 wherein the second transmission means further comprises fiber optic means.

10. The system of Claim 1 wherein the demodulating means comprises one-shot multivibrator means.

11. The system of Claim 1 wherein the demodulating means comprises counting means.

12. An integrated circuit digital FSK modem for transmitting and receiving FSK signals derived from data signals, comprising:

(a) clock means for providing at least one pair of electrical signals at different frequencies, the lower frequency signal representing a mark and the higher frequency signal representing a space;

(b) FSK modulating means connected to receive the data signals and the mark and space signals, for selecting either a mark or a space signal depending upon the corresponding data signal;

(c) first transmission means connected to receive and transmit the selected mark or space signal;

(d) second transmission means connected to receive FSK signals; and

(e) demodulating means connected to receive the FSK signals and to identify them as mark or space signals and to provide corresponding data signals.

Fig.1

Fig. 2

0147008

Fig. 3

Fig. 4a

Fig. 4b

CKIN

CLKQ8-

CLK8

CLKQ16-

CLKQ16

SDOUTA

TDQ

FSKOUTA

*Fig. 5*

DEMODULATION
DCDOUTA- TURNED ON | MARK TO | SPACE TO | DCDOUTA-TURNED OFF
| SPACE | MARK | OFF
| TRANSITION | TRANSITION |

FSKDA |

DCSOUTA- |

SDINQA |

*Fig. 6a*

0147008

LOW FREQ. | HI FREQ

FSKDA

$\leftarrow$ 407 ns $\rightarrow$

OSA
FQA-
FQIA
FQ2A
FQ3A
SDINQA

*Fig.6b*

FSKDA

$\leftarrow$ 814 ns $\rightarrow$

OSA

FQA-
FQIA
FQ2A
FQ3A

SDINQA

HIGH FREQ | LOW FREQ

*Fig.6c*

2/2

0147008